# EUROPÄISCHE PATENTSCHRIFT

(11) **EP 2 006 203 B1**
(45) Veröffentlichungstag und Bekanntmachung des Hinweises auf die Patenterteilung: **30.12.2009**
(21) Anmeldenummer: 08011239.4
(22) Anmeldetag: 20.06.2008
(51) Int. Cl.: B65B 57/14, B65G 13/00, G01N 3/00

(54) **Packmaschine und Austrageeinrichtung für eine Packmaschine**
Packing machine and delivery device for a packing machine
Machine à emballer et dispositif d'extraction pour une machine à emballer

(30) Priorität: 22.06.2007 DE 102007029278
(43) Veröffentlichungstag der Anmeldung: 24.12.2008
(73) Patentinhaber: Haver & Boecker oHG, 59302 Oelde (DE)
(72) Erfinder: Combrink, Alois, 59302 Oelde (DE)
(74) Vertreter: Schütte, Hartmut

(56) Entgegenhaltungen:
- EP-A- 0 137 662
- DE-A1-102006 027 921
- NL-C2- 1 013 878

## Beschreibung

Die Erfindung betrifft eine Austrageeinrichtung für eine Packmaschine, sowie eine mit einer solchen Austrageeinrichtung ausgerüstete Packmaschine und ein Verfahren zum Abfüllen von Schüttgütern in Säcke.

Erfindungsgemäße Packmaschinen können zum Abfüllen von Schüttgütern in sogenannte offene Säcke vorgesehen sein, bei denen das Füllorgan von oben in den offenen Sack hineinragt. Dabei kann in solchen Fällen nahezu der gesamte Sackquerschnitt als Einfüllquerschnitt verwendet werden, sodass eine hohe Füllgeschwindigkeit erreichbar ist.

Des Weiteren eignet sich die Erfindung insbesondere auch zum Abfüllen von sogenannten Ventilsäcken, bei denen an dem Gebinde ein laschenförmiger Abschnitt vorgesehen ist, an dem ein Sackventil vorgesehen ist. Der Sack wird zum Füllen auf das als Füllstutzen ausgebildete Füllorgan aufgesteckt, durch welches die Füllung des Sacks mit dem abzufüllenden Schüttgut erfolgt. Zwischen dem Füllorgan und dem Sackventil kann eine Blähmanschette vorgesehen sein und beim Füllvorgang aufgeblasen werden, um den Sack gegenüber der Umgebung abzudichten.

Nach dem Füllen können bei allen Verfahren die Säcke dicht verschlossen werden. Beim Füllen von offenen Säcken wird die Einfüllöffnung z.B. durch einen Schweißvorgang verschlossen, um ein Austreten des abgefüllten Schüttguts zu verhindern. Bei Ventilsäcken kann in dem Sackventil ein sogenanntes selbstschließendes Ventil vorgesehen sein, um automatisch den Austritt von eingefülltem Schüttgut im Wesentlichen zu verhindern. Gegebenenfalls kann, da die Dichtwirkung heute nicht mehr ausreichend ist bei modernen Anlagen auch bei Ventilsäcken eine Verschließeinheit vorgesehen werden, die die Sackventile verklebt oder verschweißt, um den Austritt von abgefülltem Material zu verhindern.

Bei allen Füllmaschinen kann es aber z.B. durch einen Fehler im Füllprozess oder durch fehlerhaftes Sackmaterial vorkommen, dass einzelne Säcke undicht sind. Beispielsweise können die von einer mit mehreren Füllorganen ausgerüsteten rotierenden Packmaschine abgeworfenen Säcke beim Auftreffen auf die Austrageeinrichtung platzen, insbesondere wenn das verwendete Sackmaterial Schwachstellen aufweist. Dabei können großflächige Brüche auftreten; es kann aber auch ein kleiner feiner Riss entstehen, durch den nur eine relativ geringe Menge des abgefüllten Schüttguts austritt, wobei aber in diesem Fall davon auszugehen ist, dass beim weiteren Transport und der Weiterbehandlung des gefüllten Sacks weiteres Schüttgut aus dem Sack austritt. Das austretende Schüttgut verschmutzt dann die Palette, auf der die Säcke gestapelt werden, den Transport-LKW oder die Verkaufsfläche in Geschäften.

Heutzutage stellt der Markt erhöhte Anforderungen an die Qualität und auch die Dichtigkeit der Säcke, um eine Verschmutzung der Umgebung und z.B. von Verkaufsräumen zu vermeiden. Auch die Kunden erwarten saubere Säcke. Deshalb gibt es die Anforderung an Packmaschinen, Säcke bzw. Sackverschlüsse auf die Qualität zu überprüfen, um es zu ermöglichen, unzureichend verschlossene Säcke zuverlässig auszuschleusen. Der Grund ist einleuchtend, da beispielsweise bei Ventilsäcken nur ein Sack nicht ganz verschlossen sein muss, um eine ganze Palette zu verschmutzen. Noch gravierender ist dies beim Einsatz von Offensäcken die beispielsweise in einer Form-Fill-Seal-Maschine hergestellt und verarbeitet werden, da dort ein defekter Sack dazu führen kann, dass eine gefüllte Palette sogar umfällt oder zumindest, dass der Sack durch mühsames händisches Depalettieren wieder aus der Palette entfernt werden muss.

Zur Überprüfung der Dichtigkeit von Säcken und der Erkennung von Sackundichtigkeiten sind verschiedene Techniken bekannt geworden EP 0 137 662 offenbart eine Vorrichtung gemäß dem Oberbegriff des Anspruchs 1. Beispielsweise sind fotoelektrische Verfahren bekannt geworden, bei denen das aus einem Sack herausrieselnde Material mittels einer Lichtschranke detektiert wird, um undichte Säcke zu erkennen. Ein solches Verfahren ermöglicht die Überprüfung der Dichtigkeit von Säcken in absolut staubfreien Bereichen, aber es hat sich insbesondere beim Abfüllen von staubenden Materialien als ungeeignet erwiesen, da beim Füllvorgang oder am Ende des Füllvorgangs regelmäßig kleine oder kleinste Mengen des abzufüllenden Schüttguts in die Umgebung gelangen, die zu einem entsprechenden Staubanteil in der Umgebungsluft führen. Dadurch werden bei der Abfüllung von staubenden Materialien Säcke als undicht erkannt, obwohl die Säcke dicht verschlossen sind oder es werden undichte Säcke nicht als undicht erkannt, da die Einstellschwelle zur Erkennung eines undichten Sacks ungünstig gewählt wurde. Des Weiteren kann durch Staubablagerung auf der Fotozelle das Messergebnis noch weiter verfälscht werden. Insgesamt eignet sich ein solches Verfahren deshalb nicht zur Überprüfung der Dichtigkeit von Säcken bei der Abfüllung von staubenden Materialien.

Des Weiteren sind Verfahren zur Überprüfung der Sackdichtigkeit bekannt geworden, bei denen über eine Farbmessung ein Farbumschlag detektiert wurde, indem z.B. bei der Abfüllung von einem weißfarbigen Produkt, z.B. Gips, ein Farbumschlag an auf den Säcken angeordneten schwarzen Gurten detektiert wurde. Wenn die schwarzen Gurte ein gewissen Grauton erreicht hatten, wurde auf eine Undichtigkeit der Säcke zurückgeschlossen. Problematisch bei diesem bekannten Verfahren ist die Einstellung des Schwellwertes, da durch eventuell vorhandenen Umgebungsstaub bedingt die Gurte nicht immer eine tiefschwarze Farbe aufweisen, sodass sich auch dieses Verfahren als ungeeignet erwiesen hat. Außerdem eignet sich dieses Verfahren nur für bestimmte Farbkombinationen aus Verpackung und abgefülltem Material.

Ein weiteres bekanntes Verfahren beruht darauf, dass die gefüllten und dicht verschlossen Säcke unter einem Pressband herlaufen und zwar derart, dass ein Teil der Länge oder Breite des Sacks belastet wird, während ein weiterer Anteil frei verbleibt. Dadurch bildet sich bei einem dicht verschlossenen Sack in der freien Hälfte des Sacks eine Luftblase der im Produkt noch vorhandenen Luft, was zu einer Luftblase führt, die z.B. über optische Detektoren detektierbar ist. Da der Luftanteil im Sack von dem abzufüllenden Material und den weiteren Bedingungen abhängt und von Fall zu Fall variieren kann, hat auch dieses Verfahren keine zufriedenstellende Genauigkeit erbracht.

Insgesamt lässt sich feststellen, dass bei der Abfüllung von pulverförmigen Materialien mit keinem der bekannten Verfahren eine zufriedenstellende Überprüfung der Sackdichtigkeit möglich ist.

Es ist deshalb die Aufgabe der vorliegenden Erfindung eine Vorrichtung und ein Verfahren zur Verfügung zu stellen, womit eine zuverlässige Überprüfung der Sackdichtigkeit nach der Abfüllung auch von staubenden bzw. pulverförmigen Produkten in Säcke mit hoher Genauigkeit möglich ist.

Diese Aufgabe wird gelöst durch eine Einrichtung mit den Merkmalen des Anspruchs 1, durch eine Packmaschine mit den Merkmalen des Anspruchs 11 und durch die Verfahren mit den Merkmalen der Ansprüche 14 und 15. Bevorzugte Ausgestaltungen sind Gegenstand der Unteransprüche. Weitere Vorteile und Merkmale ergeben sich aus der allgemeinen Beschreibung und der Beschreibung eines Ausführungsbeispiels.

Die erfindungsgemäße Austrageeinrichtung für eine Packmaschine ist mit einer Transporteinrichtung ausgerüstet, um die mit z.B. staubenden oder pulvrigen Schüttgütern gefüllten Säcke abzutransportieren. Es ist wenigstens eine Überwachungseinrichtung zur Überwachung der Dichtigkeit der gefüllten Säcke vorgesehen, welche der Transporteinrichtung zugeordnet ist. Dabei weist die Überwachungseinrichtung wenigstens einen Gewichtssensor auf, der direkt das aus einem Sack heraustretende Schüttgut erfasst, um einen Kennwert für die Sackdichtigkeit bei der Abfüllung von staubenden Materialien zu erhalten.

Die erfindungsgemäße Austrageeinrichtung bietet erhebliche Vorteile. Die Austrageeinrichtung transportiert nicht nur die gefüllten Säcke von einer Packmaschine weg, sondern überprüft gleichzeitig die Dichtigkeit der Säcke, wobei aufgrund von statistischen Auswertungen eine Analyse des Packprozesses möglich ist.

Der Einsatz eines Gewichtssensors ermöglicht zuverlässig die Überprüfung der Sackdichtigkeit und zwar unabhängig von dem abzufüllenden Produkt und den Umgebungsbedingungen.

Insbesondere durch die direkte Messung des ausgetretenen Schüttguts wird eine hohe Genauigkeit erzielt, sodass mit hoher Zuverlässigkeit auch geringe Undichtigkeiten detektiert werden können. Wenn hingegen das ausgetretene Schüttgut nicht direkt vermessen wird, sondern das Sackgewicht gemessen und daraus ein ausgetretener Anteil berechnet wird, gibt es erhebliche Unsicherheiten bei der Dichtigkeitsbestimmung.

Wenn aus dem Sack beispielsweise nur ein Masse von z.B. 10 oder 50 Gramm ausgetreten ist, so ist der Anteil bei einem 25 oder 50 kg schwerem Sack gering, kann aber doch zu einer erheblichen Verschmutzung der Umgebung und der äußeren Sackwandung führen. Um beispielsweise bei einer Vermessung des gesamten Sackgewichts ein solches Fehlgewicht noch zuverlässig detektieren zu können, muss das Sackgewicht mit einer sehr hohen Genauigkeit ermittelt werden.

Eine ganz erhebliche Schwierigkeit besteht auch darin, dass das bei dem Abwurf vorliegende Sackgewicht auch nur mit einer bestimmten Genauigkeit ermittelt wird, da aus dem Ventil eines Ventilsacks beispielsweise noch ein geringer Anteil entweichen kann. Die Ungenauigkeiten addieren sich. Insgesamt ergibt sich eine erhebliche Unsicherheit bei der Überprüfung der Sackdichtigkeit, wenn die Sackdichtigkeit über die Messung des Gesamtgewichts des gefüllten Sacks erfolgen soll. Die erfindungsgemäße direkte Messung des ausgetretenen Schüttguts vermeidet solche Nachteile und erlaubt eine hohe Genauigkeit.

In einer besonders bevorzugten Weiterbildung der Erfindung weist die Austrageeinrichtung wenigstens eine Auffangeinheit auf, um das aus einem undichten Sack austretende Schüttgut aufzufangen. Diese Weiterbildung bietet besondere Vorteile, da zur Überprüfung der Sackdichtigkeit nicht der gesamte Sack gewogen werden muss, da die Sackgewichte und die zulässigen Gewichtstoleranzen eines Gebindes erheblich größer sind, als bei einer kleinen Undichtigkeit zu erwarten ist. Deshalb könnte mit der herkömmlichen Genauigkeit und des Wägebereiches einer Sackkontrollwaage, die zur Erfassung von untergewichtigen Säcken eingesetzt wird, dieser Wert nicht zuverlässig ermittelt werden. Deshalb wird, um ein eventuelles Fehlgewicht zu detektieren, nur das ausgetretene und von der Auffangeinheit aufgenommene Schüttgut gewogen, wodurch eine besonders hohe Genauigkeit und Zuverlässigkeit der Sackdichtigkeitsüberprüfung erreicht wird. Treten beispielsweise aus einem kleinen Riss 20 g des abzufüllenden Materials aus dem Sack aus, so stellt das bei einem Gesamtgewicht von z.B. 50 kg nur einen sehr kleinen Anteil dar, so dass der Unterschied im Gesamtgewicht unter Umständen als nicht bedeutsam angesehen würde. Wird hingegen eine Auffangeinheit mit 20 g Schüttgut belastet, so hat sich das wirksame Gewicht ganz erheblich erhöht.

In einer bevorzugten Ausgestaltung der Erfindung ist eine Belastungseinheit oder Belastungseinrichtung vorgesehen, die zur Belastung der gefüllten Säcke an der Austrageeinrichtung dient. Damit werden die Säcke einer Belastung ausgesetzt, sodass durch eventuell vorhandene Risse oder Löcher oder dergleichen das abgefüllte Produkt austritt. Das austretende Produkt oder wenigstens ein erheblicher Anteil des austretenden Produkts wird dann von der Auffangeinheit aufgefangen und detektiert, sodass ein direktes Maß für die Undichtigkeit erfasst werden kann.

Besonderes bevorzugt ist die bzw. wenigstens eine Überwachungseinrichtung der Belastungseinrichtung nachgeschaltet.

In vorteilhaften Weiterbildungen ist eine Mehrzahl hintereinander angeordneter Transporteinheiten vorgesehen, die insbesondere getrennt voneinander angeordnet sind. Das ermöglicht, das auf eine Transporteinheit fallende und aus einem Sack herausgetretene Produkt nicht auf die nächste Austrageeinheit weiter getragen wird, wodurch eine Entkopplung der einzelnen Transporteinheiten möglich wird.

Vorzugsweise ist eine Überwachungseinrichtung einem Zwischenraum zwischen zwei Transporteinheiten zugeordnet. Die Überwachungseinrichtung kann insbesondere unterhalb des Zwischenraums vorgesehen sein oder über ein Leitkanal oder dergleichen mit dem Zwischenraum verbunden sein, sodass das in dem Zwischenraum zwischen die Transporteinheiten fallende Material der Überwachungseinrichtung zugeleitet wird.

Vorzugsweise ist eine erste Transporteinheit vorgesehen, auf die die abzutransportierenden Säcke nach erfolgtem Prüfvorgang abgelegt oder abgeworfen werden. Auf dieser ersten Transporteinheit kann deshalb insbesondere bei der Füllung von Ventilsäcken eine gewisse Menge von abzufüllenden Material auftreffen, da nach Abnahme eines Ventilsacks im Ventilbereich meist noch eine gewisse Menge an Produkt vorhanden ist. Diese wird meist beim Auftreffen auf die erste Transporteinheit des Austragebandes ausgestoßen, sodass dort eventuell vorhandenes Material nicht an sich schon ein Indiz für einen defekten Sack ist.

Wird hingegen der gefüllte Sack von der ersten Transporteinheit auf eine zweite bzw. bestimmte Transporteinheit weitergeleitet, so ist dort auf der zweiten bzw. bestimmten Transporteinheit austretendes Material ein Anzeichen für eine Sackundichtigkeit. Deshalb ist es bevorzugt, das die Überwachungseinrichtung oder eine Überwachungseinrichtung zwischen der bestimmten und einer nachfolgenden Transporteinheit vorgesehen ist. Vorzugsweise ist die Belastungseinrichtung als Rüttelstrecke oder dergleichen vorgesehen, welche vibrierende Bewegungen auf den gefüllten Sack überträgt, um den Produktspiegel im Sack zu egalisieren und durch die auf den Sack ausgeübte Belastung einen Austritt von Material durch eventuelle Risse zu provozieren.

In einer anderen Ausgestaltung kann anstelle einer Rüttelstrecke oder zusätzlich dazu eine Sackpresseinrichtung vorgesehen sein, die z.B. in Form einer Bügel- und/oder Presstrecke ausgeführt ist, und in welcher der Sack zusammengepresst wird, um bestimmte Packmaße zu erreichen und/oder um einen Materialaustritt aus dem Sack zu provozieren. Das aus dem Sack austretenden Material wird von der Auffangeinheit oder den Auffangeinheiten aufgefangen und über den Gewichtssensor wird ein Maß für das auf dem Sack ausgetretene Schüttgut erfasst, um einen Kennwert für die Sackdichtigkeit zu erhalten.

Möglich ist es auch, das eine Transporteinheit einen Bandeinlauf aufweist, um den Sack z.B. in vertikaler Richtung in eine vorbestimmte Form zu bringen.

In bevorzugten Weiterbildungen sind mehrere Transporteinheiten als Transportbänder ausgeführt. Vorzugsweise ist die Überwachungseinrichtung an dem Bandstoß zweier aneinander angrenzender Transportbänder angeordnet oder dem Bandstoß zugeordnet.

In allen zuvor beschriebenen Weiterbildungen und Ausgestaltungen der Erfindung ist der Gewichtssensor vorzugsweise mit einer handelsüblichen Dehnungsmesstechnik ausgerüstet. Damit ist eine zuverlässige und hochauflösende Erfassung des Gewichts möglich. Da bei der Erfassung des Gewichts einer Auffangeinheit der Gewichtssensor derart ausgelegt werden kann, dass nur maximal 10%, 20% oder 30% des Sackgewichts erfassbar sind, wird eine besonders hochauflösende Messung des aus einem Sack herausgetretenen Materials ermöglicht. Der Gewichtssensor kann auch wenigstens ein Piezoelement umfassen.

In bevorzugten Weiterbildungen ist wenigstens eine Auffangeinheit als Auffangschale ausgeführt, die sich beim Einsatz an Packmaschinen zur Abfüllung von Offensäcken vorzugsweise über die gesamte Breite der Transporteinheit erstreckt, sodass in den Spalt zwischen zwei Transporteinheiten hineinfallendes bzw. mit der Förderbewegung der Transporteinheit hineintransportiertes Schüttgut über der gesamten Breite von der Auffangschale aufgefangen und detektiert wird.

In bevorzugten Weiterbildungen ist die Auffangeinheit dreh- oder schwenkbar ausgeführt, um durch eine Dreh- bzw. Schwenkbewegung ein Abwerfen des aufgefangenen Materials zu ermöglichen. Auf diese Weise wird besonders einfach ein zuverlässiger und dauerhafter Betrieb ermöglicht.

In anderen Ausgestaltungen oder zusätzlich dazu kann auch eine Absaugung vorgesehen sein, um aufgefangenes Material aus der Auffangeinheit bei Bedarf abzusaugen.

In bevorzugten Weiterbildungen umfasst die Auffangeinheit eine doppel- oder mehrseitige Auffangschale, wobei durch Drehung der Auffangeinheit um einen entsprechenden Winkel die nächste Auffangschale in die Betriebsposition gebracht wird, während bei der zuvor zum Auffangen des Schüttguts dienenden Auffangschale das sich dort angesammelte Material abgeworfen wird, sodass sie anschließend wieder zur Verfügung steht.

In allen Ausgestaltungen kann die Überwachungseinrichtung einen Auffangtrichter umfassen, der das über z.B. der Breite der Transporteinheit bzw. über der Breite des Spalts zwischen zwei Transporteinheiten herabrieselnde Material sammelt und der Auffangeinheit zuleitet.

In einer weiteren bevorzugten Weiterbildung ist eine Prallplatte vorgesehen, die z.B. unter einem Winkel zur Horizontalen angeordnet ist und auf welche das herabrieselnde Material auffällt. Der beim Auftreffen auf die Prallplatte entstehende Impuls wird ausgewertet und es wird ein Maß für das Gewicht ermittelt, sodass auch bei Einsatz einer Prallplatte ein Kennwert für die Dichtigkeit des Sacks gebildet werden kann.

Die erfindungsgemäße Packmaschine dient zum Abfüllen von Schüttgütern in Säcke und insbesondere zum Abfüllen von pulverigen und staubenden Materialien in Säcke und weist wenigstens ein Füllorgan auf, mit welchem der zu füllende Sack befüllt wird. Weiterhin kann wenigstens eine Sackabnahmeeinrichtung zum Abnehmen der gefüllten Säcke und zur Übergabe der Säcke an eine Austrageeinrichtung vorgesehen sein. Die Austrageeinrichtung weist eine Transporteinrichtung auf, mit der die gefüllten Säcke abtransportiert werden. Weiterhin ist wenigstens eine Überwachungseinrichtung zur Überwachung der Dichtigkeit der gefüllten Säcke vorgesehen, die insbesondere der Transporteinrichtung zugeordnet ist. Die Überwachungseinrichtung weist dabei wenigstens einen Gewichtssensor auf, der ein Maß für das aus einem Sack heraustretende Schüttgut erfasst, um einen Kennwert für die Sackundichtigkeit zu ermitteln.

Auch die erfindungsgemäße Packmaschine bietet eine Vielzahl von Vorteilen. Die Packmaschine gemäß der vorliegenden Erfindung ermöglicht die Abfüllung von allen Arten von Schüttgütern und auch von pulverigen und staubigen Produkten, wobei aufgrund der Sackdichtigkeitsüberwachung ein höheres Maß an Sauberkeit in der Umgebung und bei der Weiterverarbeitung realisierbar ist. Weiterhin weisen die abtransportierten Säcke eine durchschnittlich höhere Sackqualität auf, da fehlerhafte Säcke erkannt uns somit aussortiert werden können.

Vorzugsweise ist die Packmaschine mit einer Mehrzahl an Füllorganen ausgerüstet und kann insbesondere rotierend ausgeführt sein.

Die Packmaschine kann zum Abfüllen von Schüttgütern in Ventilsäcke geeignet und bestimmt sein oder in anderen Ausgestaltungen zum Abfüllen von Schüttgütern in Offensäcke ausgelegt sein. Bei der Abfüllung in Offensäcke kann die erfindungsgemäße Packmaschine aus einer endlosen Schlauchfolienbahn die benötigten Säcke herstellen, abfüllen und anschließend verschließen.

Eine Sackverschließeinheit an der Packmaschine ist in allen Fällen bevorzugt, um bei Offensäcken das Einfüllende zu verkleben oder zu verschweißen, und um bei Ventilsäcken das Ventil zu verschließen.

In bevorzugten Weiterbildungen der erfindungsgemäßen Packmaschine werden die als undicht erkannten Säcke aussortiert.

Bei der Füllung einer Vielzahl von Säcken kann eine statistische Auswertung erfolgen und in Abhängigkeit der nacheinander ermittelten Kennwerte kann wenigstens ein Füllparameter und/oder wenigstens ein Verschließparameter angepasst werden. Wird beispielsweise festgestellt, das eine höhere Anzahl an Säcken undicht ist als bei normalen Umständen zu erwarten wäre, kann der beim Abfüllen vorherrschende Fülldruck reduziert werden, um weitere Sackbrüche zu vermeiden. Andererseits kann auch ein Verschließparameter, wie z.B. die Verschweißzeit oder die Verschweißintensität variiert werden, um Fehler beim Verschließen der Säcke zu vermeiden.

Bei dem erfindungsgemäßen Verfahren wird ein Sack mit z.B. einem pulverigen bzw. staubenden Schüttgut gefüllt und anschließend verschlossen. Der gefüllte Sack wird eine Austrageeinrichtung übergeben und das aus dem gefüllten Sack austretende Schüttgut wird aufgefangen und gewogen, um ein Maß für das aus dem Sack herausgetretene Schüttgut zu erfassen. Dadurch kann ein Kennwert für die Sackdichtigkeit ermittelt werden. Weiterhin erfolgt vorzugsweise ein Aussortieren von als undicht erkannten Säcken.

Das ausgetretene Material kann in einer Auffangschale oder dergleichen aufgefangen werden, die periodisch oder kontinuierlich gewogen wird. Bei jedem Sack oder aber bei Erreichen eines vorbestimmten Gewichts kann die Auffangschale oder Auffangeinheit entleert werden. Wenn immer nur die relative Gewichtszunahme detektiert wird, muss nicht jedesmal entleert werden, wodurch die Durchsatzleistung erhöht wird.

Bei einer andere Ausgestaltung des erfindungsgemäßen Verfahrens zum Abfüllen von Schüttgütern in Säcke wird ein Sack mit einem Schüttgut gefüllt und anschließend verschlossen. Der gefüllte Sack wird einer Austrageeinrichtung übergeben und das aus dem Sack heraustretende Schüttgut wird wenigstens teilweise auf eine Prallplatte geleitet. Der beim Aufprall entstehende Impuls wird erfasst und ein Kennwert für die Sackdichtigkeit des Sacks ermittelt. Dabei können die aufgenommenen Messwerte gemittelt und/oder aufsummiert werden.

In Weiterbildungen und Ausgestaltungen des erfindungsgemäßen Verfahren und der erfindungsgemäßen Packmaschine wird eine zuvor beschriebene Austrageeinrichtung verwendet.

Weitere Vorteile und Anwendungsmöglichkeiten der vorliegenden Erfindung ergeben sich aus den Ausführungsbeispielen, die im folgenden mit Bezug auf die beiliegenden Figuren beschrieben werden.

### Darin zeigen:

- Fig. 1: eine Aufsicht auf eine erfindungsgemäße Packmaschine mit einer erfindungsgemäßen Austrageeinrichtung in stark schematischer Ansicht;
- Fig. 2: eine perspektivische Ansicht einer erfindungsgemäßen Austrageeinrichtung;
- Fig. 3: eine perspektivische Ansicht der Überwachungseinrichtung nach Fig. 2;
- Fig. 4: eine Aufsicht auf die Überwachungseinrichtung nach Fig.3;
- Fig. 5: eine Seitenansicht der Überwachungseinrichtung nach Fig. 3;
- Fig. 6: eine stark schematische Seitenansicht eines weiteren Ausführungsbeispiels, bei dem eine Prallplatte in der Überwachungseinrichtung eingesetzt wird.

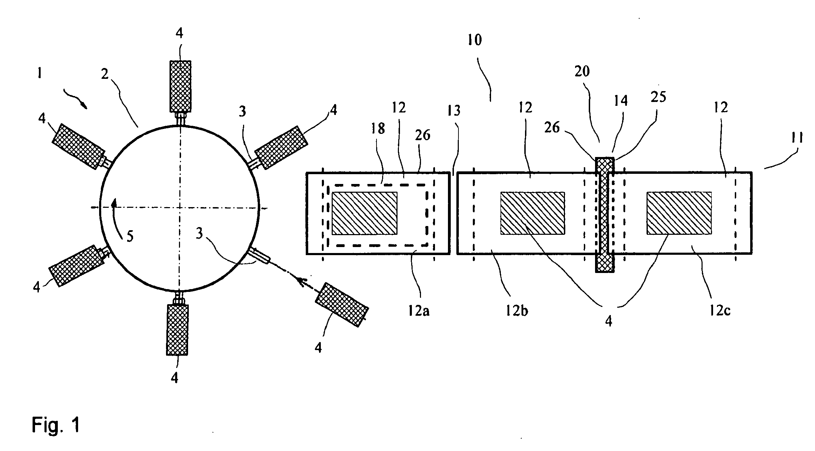

In Figur 1 ist eine stark schematische Aufsicht auf eine erfindungsgemäße Packmaschine 1 dargestellt, die mit einer erfindungsgemäßen Austrageeinrichtung 10 ausgerüstet ist. Obwohl die Packmaschine 1 hier im Beispiel zum Abfüllen von Ventilsäcken 4 eingesetzt wird, kann die erfindungsgemäße Packmaschine in anderen Ausgestaltungen auch zum Füllen von Offensäcken vorgesehen sein, bei denen die Säcke kein Ventil aufweisen, sondern im Wesentlichen über den gesamten Querschnitt befüllt werden.

Die Packmaschine 1 weist ein Gehäuse bzw. Gestell 2 auf und ist als rotierende Packmaschine ausgeführt, die hier im Beispiel sechs Füllstutzen 3 aufweist. In anderen Ausgestaltungen kann eine andere Anzahl an Füllorganen bzw. Füllstutzen 3 vorgesehen sein. Es können auch mehr oder weniger Füllorgane vorgesehen sein; beispielsweise können auch 8, 10, 12 oder 16 Füllorgane an der erfindungsgemäßen Packmaschine angeordnet sein.

Vor der Befüllung der Säcke 4 werden die Säcke 4 mit einer (nicht dargestellten) Aufschiebeeinrichtung auf die Füllstutzen 3 aufgeschoben oder aufgeschossen. Möglich ist aber auch ein Aufstecken per Hand.

Die Packmaschine 1 dreht in der Drehrichtung 5, während die einzelnen Säcke 4 mit dem abzufüllenden Schüttgut 29 befüllt werden. Mit der Packmaschine 1 können insbesondere auch staubende und pulverförmige Schüttgüter 29 abgefüllt werden. Beispielsweise können alle Arten von Baustoffen in Schüttgutform oder pulverförmige chemische Produkte etc. abgefüllt werden.

Während der Drehung der Packmaschine 1 werden die einzelnen Säcke 4 befüllt und gleichzeitig wird deren Gewicht kontinuierlich bzw. in kleinen Zeitabständen ermittelt und mit dem angestrebten Füllgewicht verglichen. Wenn ein vorbestimmtes Gewicht erreicht wird, wird der Füllprozess verlangsamt, in dem von der Grobstromfüllung auf die Feinstromfüllung umgeschaltet wird, in der eine geringere Menge des abzufüllenden Schüttguts 29 pro Zeiteinheit in den Sack 4 transportiert wird, um Druckspitzen während der Abfüllung zu vermeiden und um das angestrebte Füllgewicht genau zu erreichen.

Nach Erreichen des Sollgewichts wird der Füllprozess gestoppt und der gefüllte Sack 4 wird von dem Füllstutzen 3 abgenommen, wonach das Sackventil in einer (nicht dargestellten) Verschließeinrichtung verschlossen wird. Das Verschließen kann über ein Verschweißen oder über die Zugabe von Klebstoff erfolgen.

Der gefüllte und verschlossene Sack 4 wird anschließend maschinell oder manuell auf die Austrageeinrichtung 10 geworfen oder gelegt, wo er auf die Transporteinheit 12a der Transporteinrichtung 11 gelangt. Beim Aufprall des gefüllten Sacks 4 auf eine der Transporteinheiten 12 der Transporteinrichtung 11 tritt insbesondere ein Teil des im Bereich des Sackventils eventuell noch vorhandene Schüttgut aus, welches von dem Transportband 18 mit weiter transportiert wird.

An die erste Transporteinheit 12a schließt sich eine zweite bzw. weitere Transporteinheit 12b an, wobei zwischen den Transporteinheiten 12a und 12b ein Luftspalt 13 verbleibt, in den das auf dem Transportband 18 liegende Schüttgut hinein fällt, welches beim Aufprall auf die Transporteinheit 12a z.B. aus dem Sackventil entwichen ist. Durch den Übergang der Säcke 4 von der ersten Transporteinheit 12a auf die zweite Transporteinheit 12b wird sichergestellt, dass auf der hier zweiten Transporteinheit 12b kein Schüttgut mehr vorhanden ist.

Die zweite oder eine weitere Transporteinheit 12b ist mit der nur andeutungsweise dargestellten Belastungseinrichtung 15 versehen, welche beispielsweise eine rüttelnde Bewegung auf den gefüllten Sack 4 von unten überträgt. Dadurch wird der gefüllte Sack 4 belastet, sodass durch einen eventuell vorhandenen Riss in der Sackhülle Schüttgut 29 aus dem Inneren des Sacks 4 austritt und auf das Förderband 12a gerät.

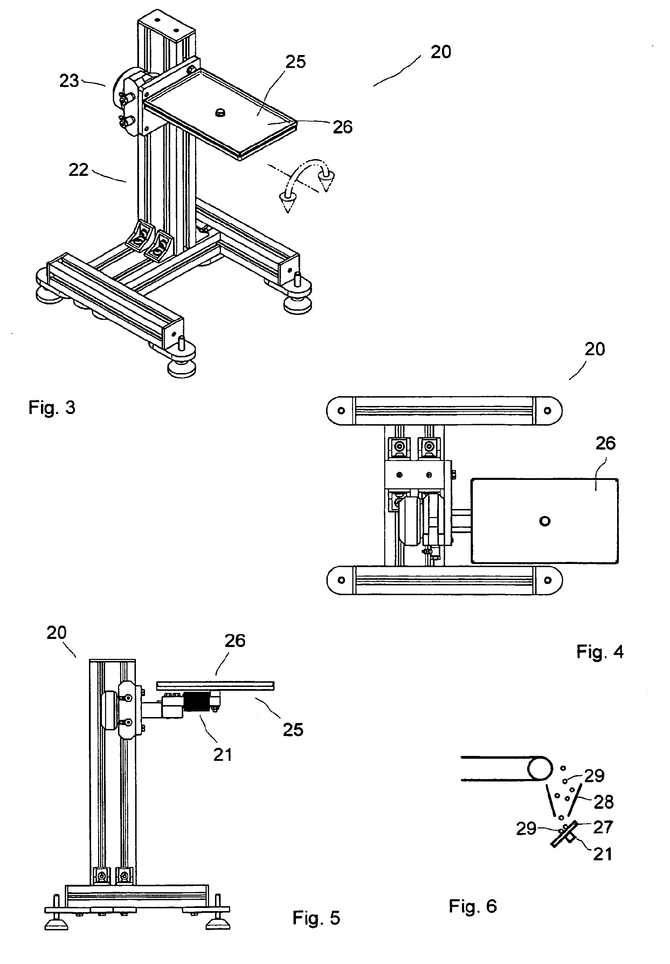

Am Ende der zweiten Transporteinheit 12b schließt sich ein weiterer Spalt 14 an, in den das während des Belastungsvorgangs ausgetretene Schüttgut 29 hinein fällt. Unterhalb des Spaltes 14 ist eine Überwachungseinrichtung 20 vorgesehen, die hier eine als Auffangschale 26 ausgeführte Auffangeinheit 25 umfasst. Somit wird das während der Rüttelbewegung durch die Belastungseinrichtung 15 ausgetretene Material bzw. Schüttgut 29 in der Auffangschale 26 gesammelt. Die Überwachungseinrichtung 20 verfügt weiterhin vorzugsweise über ein mit Dehnungsmesstechnik oder mit einem Piezosensor ausgerüsteten Gewichtssensor 21 (Vgl. auch die Figur 6), sodass das Gewicht des ausgetretenen und aufgefangenen Schüttguts 29 erfasst wird.

Damit ist für jeden Sack 4 feststellbar, ob und wie viel Material während der Belastung des Sacks 4 austritt, sodass ein Maß für das aus dem Sack 4 herausgetretene Schüttgut 29 erfasst werden kann, aus dem ein Kennwert für die Sackdichtigkeit abgeleitet werden kann.

Der Kennwert wird verwendet, um zu entscheiden, ob der Sack 4 als qualitativ hochwertig eingestuft und der weiteren Verwendung zugeführt oder ob der Sack 4 als minderwertig eingestuft wird und dem weiteren Verladeprozess entzogen wird.

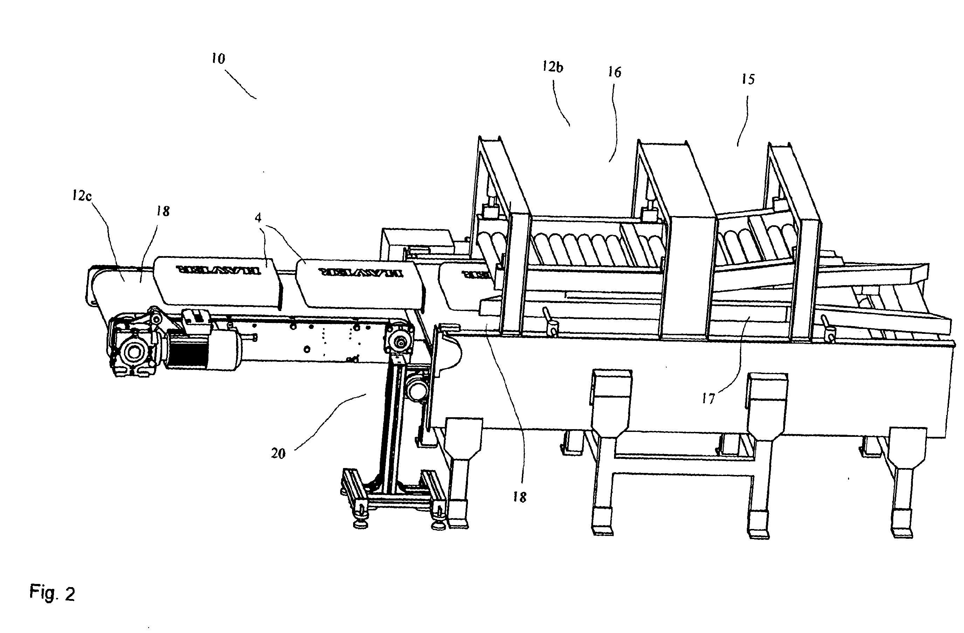

In Figur 2 ist eine perspektivische Ansicht der Austrageeinrichtung 10 dargestellt, an der eine Überwachungseinrichtung 20 vorgesehen ist.

Die hier in der Darstellung nach Figur 2 auf das rechte Ende der Austrageeinrichtung 20 auftreffenden Säcke 4 werden mit den Transporteinheiten 12 weiter transportiert.

Die zweite Transporteinheit 12b weist eine Belastungseinrichtung 15 auf, die hier als Sackpresseinrichtung 16 ausgeführt ist und eine Bügel- und Pressstrecke umfasst. Dabei verfügt die Sackpresseinrichtung 16 über einen Bandeinlauf 17, wodurch die Säcke 4 in die gewünschte Form gebracht werden. Gleichzeitig wird durch die Belastungseinrichtung 15 Druck auf die Säcke 4 ausgeübt, sodass bei gerissenen oder defekten Säcken 4 abgefülltes Schüttgut 29 austritt, welches auf das Transportband 18 gelangt.

Zwischen der Transporteinheit 12b und der Transporteinheit 12c ist ein Spalt 14 vorgesehen, durch den das sich auf dem Transportband 18 angesammelte Schüttgut 29 nach unten fällt. Dort wird es von der Auffangschale 26 der Überwachungseinrichtung 20 aufgenommen und dessen Gewicht erfasst, sodass für jeden Sack 4 entschieden werden kann, ob eine genügende Sackdichtigkeit vorliegt.

In den Figuren 3, 4 und 5 ist die Überwachungseinrichtung 20 einzeln vergrößert dargestellt. Dabei zeigt die Figur 3 eine perspektivische Darstellung der Überwachungseinrichtung 20, die hier über eine als Auffangschale 26 ausgebildete Auffangeinheit 25 verfügt. Die Auffangeinheit 25 ist über das Gestell 22 höhenverstellbar angeordnet und verfügt über eine Kippeinheit 23, mit der die Auffangschale 26 umgedreht werden kann, so dass das in der Auffangschale 26 angesammelte Material bzw. Schüttgut 29 herab fällt.

In bestimmten Ausgestaltungen kann die Auffangschale 26 zweiseitig ausgeführt sein, sodass nach einer Drehung um 180 Grad die vorher unten angeordnete Auffangschale 26 das von oben herabrieselnde Material aufnimmt, so dass nach jeder Drehung um 180 Grad die Auffangschale wieder betriebsbereit ist.

Es ist möglich, nach jedem abtransportierten Sack 4 die Auffangschale 26 zu entleeren, um jeweils ein möglichst großes Auflösungsvermögen zu erzielen. Es ist aber auch möglich, das die Auffangschale 26 nur bei Erreichen eines bestimmten aufgefangenen Gewichts entleert wird. Dabei wird dann jeweils die Differenz pro Sack 4 ermittelt, um den Kennwert für die Sackdichtigkeit abzuleiten.

In Figur 6 ist ein anderes Ausführungsbeispiel dargestellt, bei dem anstelle einer Auffangschale 26 eine Prallplatte 27 eingesetzt wird, unterhalb derer der Gewichtssensor 21 vorgesehen ist. Die Arbeitsweise ist dabei derart, dass bei Auftreffen von herabrieselndem Schüttgut 29 auf die Prallplatte 27 ein Impuls ausgelöst wird, der von der (nicht dargestellten) Auswerteeinheit erfasst und verarbeitet wird, so dass durch Aufsummierung der Anzahl und der Höhe der Impulse auf ein Maß des herabrieselnden Schüttguts 29 geschlossen werden kann, wodurch ebenfalls ein Kennwert für die Sackdichtigkeit gebildet werden kann.

In Figur 6 ist weiterhin ein Aufnahmetrichter 28 angedeutet, der das herabrieselnde Material bzw. Schüttgut 29 auf die Prallplatte 27 bündelt. Ein solcher Trichter 28 kann ebenfalls bei Verwendung einer Auffangschale 26 eingesetzt werden, um beispielsweise die Größe der eingesetzten Auffangschale 26 zu begrenzen.

### Bezugszeichenliste:

- 1: Packmaschine
- 2: Gehäuse
- 3: Füllorgan
- 4: Sack
- 5: Drehrichtung
- 10: Austrageeinrichtung
- 11: Transporteinrichtung
- 12: Transporteinheit
- 12a: Transporteinheit
- 12b: Transporteinheit
- 12c: Transporteinheit
- 13: Spalt
- 14: Spalt
- 15: Belastungseinrichtung
- 16: Sackpresseinrichtung
- 17: Bandeinlauf
- 18: Transportband
- 20: Überwachungseinrichtung
- 21: Gewichtssensor
- 22: Gestell
- 23: Kippeinheit
- 25: Auffangeinheit
- 26: Auffangschale
- 27: Prallplatte
- 28: Auffangtrichter
- 29: Schüttgut

## Patentansprüche

1. Austrageeinrichtung (10) für eine Packmaschine (1), mit einer Transporteinrichtung (11), um mit Schüttgütern gefüllte Säcke (4) abzutransportieren,
wobei wenigstens eine Überwachungseinrichtung (20) zur Überwachung der Dichtigkeit der gefüllten Säcke (4) vorgesehen ist, welche der Transporteinrichtung (11) zugeordnet ist, **dadurch gekennzeichnet, dass** die Überwachungseinrichtung (20) wenigstens einen Gewichtssensor (21) aufweist, der direkt das aus einem Sack (4) heraustretende Schüttgut (29) erfasst, um einen Kennwert für die Sackdichtigkeit zu erhalten.

2. Austrageeinrichtung (10) nach Anspruch 1, wobei die Überwachungseinrichtung (20) eine Auffangeinheit (25) mit wenigstens einer Auffangschale (26) aufweist.

3. Austrageeinrichtung (10) nach Anspruch 1 oder 2, wobei die Transporteinrichtung (11) wenigstens eine Belastungseinrichtung (15) umfasst, wobei insbesondere der Belastungseinrichtung (15) die Überwachungseinrichtung (20) nachgeschaltet ist.

4. Austrageeinrichtung (10) nach einem der vorhergehenden Ansprüche, wobei die Transporteinrichtung (11) eine Mehrzahl hintereinander angeordneter Transporteinheiten (12) umfasst und wobei zwischen einer vorhergehenden und einer folgenden Transporteinheit (12) ein Zwischenraum (14) vorgesehen ist, dem die Überwachungseinrichtung (20) zugeordnet ist.

5. Austrageeinrichtung (10) nach dem vorhergehenden Anspruch, wobei die vorhergehende Transporteinheit (12) wenigstens eine Belastungseinrichtung (15) umfasst, wobei insbesondere eine Rüttelstrecke und/oder eine Sackpresseinrichtung (16) in Form von z.B. einer Bügel- und/oder Pressstrecke vorgesehen ist.

6. Austrageeinrichtung (10) nach mindestens einem der vorhergehenden Ansprüche, wobei wenigstens eine Transporteinheit (12) ein Transportband (18) umfasst.

7. Austrageeinrichtung (10) nach mindestens einem der vorhergehenden Ansprüche, wobei der Gewichtssensor (21) wenigstens einen Dehnungsmessstreifen oder ein Piezoelement umfasst.

8. Austrageeinrichtung (10) nach mindestens einem der vorhergehenden Ansprüche 2 bis 7, wobei die Auffangeinheit (25) dreh- oder schwenkbar ausgeführt ist.

9. Austrageeinrichtung (10) nach mindestens einem der vorhergehenden Ansprüche, wobei die Überwachungseinrichtung (20) einen Auffangtrichter (28) umfasst.

10. Austrageeinrichtung (10) nach mindestens einem der vorhergehenden Ansprüche, wobei die Überwachungseinrichtung (20) eine Prallplatte (27) aufweist.

11. Packmaschine (1) zum Abfüllen von Schüttgütern (29) in Säcke (4), mit wenigstens einem Füllorgan (3), mit welchem ein zu füllender Sack (4) befüllt wird, und mit einer Sackabnahmeeinrichtung zum Abnehmen der gefüllten Säcke (4) und zur Übergabe der Säcke (4) an eine Austrageeinrichtung (10), wobei die Austrageeinrichtung (10) eine Transporteinrichtung (11) aufweist, um die mit Schüttgüter (29) gefüllten Säcke (4) abzutransportieren, wobei wenigstens eine Überwachungseinrichtung (20) zur Überwachung der Dichtigkeit der gefüllten Säcke (4) vorgesehen ist, welche der Transporteinrichtung (11) zugeordnet ist, **dadurch gekennzeichnet, dass** die Überwachungseinrichtung (20) einen Gewichtssensor (21) aufweist, der direkt das aus einem Sack (4) heraustretende Schüttgut (29) erfasst, um einen Kennwert für die Sackundichtigkeit zu ermitteln.

12. Packmaschine (1) nach Anspruch 11, welche wenigstens eine Sackverschließeinheit umfasst.

13. Packmaschine (1) nach mindestens einem der vorhergehenden Ansprüche 11 bis 12, wobei in Abhängigkeit von dem Kennwert wenigstens ein Verschließparameter angepasst wird.

14. Verfahren zum Abfüllen von Schüttgütern (29) in Säcke (4), bei dem ein Sack (4) mit einem Schüttgut (29) gefüllt und anschließend verschlossen und der gefüllte Sack (4) einer Austrageeinrichtung (10) übergeben wird, wobei das aus dem Sack (4) heraustretende Schüttgut (29) wenigstens teilweise aufgefangen und gewogen wird, woraufhin ein Kennwert für die Sackdichtigkeit des Sacks (4) ermittelt wird.

15. Verfahren zum Abfüllen von Schüttgütern (29) in Säcke (4), bei dem ein Sack (4) mit einem Schüttgut (29) gefüllt und anschließend verschlossen und der gefüllte Sack (4) einer Austrageeinrichtung (10) übergeben wird, wobei das aus dem Sack (4) heraustretende Schüttgut (29) wenigstens teilweise auf eine Prallplatte (27) geleitet und der Aufprallimpuls erfasst wird, woraufhin ein Kennwert für die Sackdichtigkeit des Sacks (4) ermittelt wird.

## Claims

1. A discharging device (10) for a packaging machine (1), comprising a conveying device (11) for conveying off bags (4) filled with bulk goods, wherein at least one monitoring device (20) for monitoring the tightness of the filled bags (4) is provided which is associated with the conveying device (11), **characterized in that** the monitoring device (20) comprises at least one weight sensor (21) which directly captures the bulk material (29) escaping from a bag (4) to obtain a parameter for the bag tightness.

2. The discharging device (10) according to claim 1, wherein the monitoring device (20) comprises a collecting unit (25) having at least one collecting tray (26).

3. The discharging device (10) according to claim 1, wherein the conveying device (11) comprises at least one weighting device (15), wherein in particular the weighting device (15) is series-connected to be followed by the monitoring device (20).

4. The discharging device (10) according to claim 1, wherein the conveying device (11) comprises a plurality of conveying units (12) disposed in series and wherein a gap (14) is provided between a preceding and a subsequent conveying unit (12) which gap is associated with the monitoring device (20).

5. The discharging device (10) according to claim 4, wherein the preceding conveying unit (12) comprises at least one weighting device (15), wherein in particular a vibrating section and/or a bag pressing device (16) in the shape of e.g. a flattening and/or pressing section is provided.

6. The discharging device (10) according to claim 4, wherein at least one conveying unit (12) comprises a conveyor belt (18).

7. The discharging device (10) according to claim 1, wherein the weight sensor (21) comprises at least one strain measuring tape or a piezoelectric element.

8. The discharging device (10) according to claim 2, wherein the collecting unit (25) is configured to be rotatable or pivotable.

9. The discharging device (10) according to claim 1, wherein the monitoring device (20) comprises a collecting hopper (28).

10. The discharging device (10) according to claim 1, wherein the monitoring device (20) comprises a baffle plate (27).

11. A packaging machine (1) for filling bulk goods (29) into bags (4), comprising at least one filling element (3) by means of which a bag (4) to be filled is filled, and comprising a bag take-off device for taking off the filled bags (4) and for transferring said bags (4) to a discharging device (10), which discharging device (10) comprises a conveying device (11) for conveying off the bags (4) filled with bulk goods (29), wherein at least one monitoring device (20) is provided for monitoring the tightness of the filled bags (4) which is associated with the conveying device (11), **characterized in that** the monitoring device (20) comprises a weight sensor (21) which directly captures any bulk goods (29) escaping from a bag (4) to determine a parameter for the bag leakiness.

12. The packaging machine (1) according to claim 11, comprising at least one bag closing unit.

13. The packaging machine (1) according to claim 11, wherein at least one closing parameter is adapted in dependence on the parameter.

14. A method for filling bulk goods (29) into bags (4), in which a bag (4) is filled with bulk goods (29) and then closed, the filled bag (4) being transferred to a discharging device (10), wherein any bulk goods (29) escaping from the bag (4) are collected and weighed at least in part, whereupon a parameter for the bag tightness of the bag (4) is determined.

15. A method for filling bulk goods (29) into bags (4), in which a bag (4) is filled with bulk goods (29) and then closed, the filled bag (4) being transferred to a discharging device (10), wherein any bulk goods (29) escaping from the bag (4) are transferred to a baffle plate (27) at least in part and the impact momentum is captured, whereupon a parameter for the bag tightness of the bag (4) is determined.

## Revendications

1. Dispositif d'extraction (10) pour une machine à emballer (1), pourvu d'un dispositif de transport (11) destiné à évacuer les sacs (4) remplis de matières en vrac, alors qu'est prévu au moins un dispositif de contrôle (20) pour contrôler l'herméticité des sacs (4) remplis, lequel est associé au dispositif de transport (11), **caractérisé en ce que** le dispositif de contrôle (20) présente au moins un capteur de poids (21) pesant directement les matières en vrac (29) qui s'échappent d'un sac (4) dans le but d'obtenir une valeur déterminant l'herméticité du sac.

2. Dispositif d'extraction (10) selon la revendication 1, tandis que le dispositif de contrôle (20) présente une unité collectrice (25) pourvue d'au moins un réceptacle (26).

3. Dispositif d'extraction (10) selon la revendication 1 ou 2, tandis que le dispositif de transport (11) comprend au moins un appareil de charge (15), le dispositif de contrôle (20) étant placé surtout en aval de l'appareil de charge (15).

4. Dispositif d'extraction (10) selon l'une quelconque des revendications précédentes, le dispositif de transport (11) comprenant plusieurs unités de transports (12) agencées l'une après l'autre et alors qu'est prévu entre deux unités de transport (12) consécutives un espace (14) doté du dispositif de contrôle (20).

5. Dispositif d'extraction (10) selon la revendication précédente, l'unité de transport (12) précédente comprenant au moins un appareil de charge (15), tandis que sont prévus en particulier un banc vibratoire et/ou un dispositif de pressage de sac (16) sous forme par exemple d'un banc à pontet et/ou de pressage.

6. Dispositif d'extraction (10) selon au moins l'une quelconque des revendications précédentes, une unité de transport (12) au moins comprenant une courroie transporteuse (18).

7. Dispositif d'extraction (10) selon au moins l'une quelconque des revendications précédentes, le capteur de poids (21) comprenant au moins une jauge de contrainte ou un élément piézo-électrique.

8. Dispositif d'extraction (10) selon au moins l'une quelconque des revendications 2 à 7, l'unité collectrice (25) étant conçue pour être rotative ou pivotante.

9. Dispositif d'extraction (10) selon au moins l'une quelconque des revendications précédentes, le dispositif de contrôle (20) comprenant un entonnoir de réception (28).

10. Dispositif d'extraction (10) selon au moins l'une quelconque des revendications précédentes, le dispositif de contrôle (20) présentant une chicane (27).

11. Machine à emballer (1) pour verser des matériaux en vrac (29) dans des sacs, pourvue d'au moins une tête de remplissage (3) au moyen de laquelle un sac à remplir (4) sera rempli, et d'un dispositif d'enlevage des sacs pour enlever les sacs remplis (4) et pour transmettre les sacs (4) à un dispositif d'extraction (10), ce dispositif d'extraction (10) présentant un dispositif de transport (11) pour évacuer les sacs (4) remplis de matériaux en vrac (29), alors qu'au moins un dispositif de contrôle (20) est prévu pour contrôler l'herméticité des sacs (4) remplis, ce dispositif de contrôle (20) étant associé au dispositif de transport (11), et **caractérisée en ce que** le dispositif de contrôle (20) présente un capteur de poids (21) pesant directement le matériau en vrac (29) qui s'échappe d'un sac (4) pour calculer une valeur d'herméticité des sacs.

12. Machine à emballer (1) selon la revendication 11, comprenant au moins une unité de fermeture des sacs.

13. Machine à emballer (1) selon au moins l'une quelconque des revendications précédentes de 11 à 12, tandis qu'un paramètre de fermeture au moins est ajusté en fonction de la valeur d'herméticité.

14. Procédé de remplissage de matériaux en vrac (29) dans des sacs (4), au cours duquel un sac (4) est rempli d'un matériau en vrac (29) pour être ensuite fermé avant que le sac rempli (4) ne soit transmis à un dispositif d'extraction (10), le matériau en vrac (29) s'échappant du sac (4) étant au moins partiellement récupéré et pesé, ce qui permet de calculer une valeur d'herméticité du sac (4).

15. Procédé de remplissage de matériaux en vrac (29) dans des sacs (4), lors duquel un sac (4) est rempli d'un matériau en vrac (29) pour être fermé avant que le sac rempli (4) ne soit transmis à un dispositif d'extraction (10), le matériau en vrac (29) s'échappant du sac (4) étant au moins partiellement transféré sur une chicane (27) et l'impulsion d'impact étant mesurée, ce qui permet de calculer une valeur d'herméticité du sac (4).
